# EUROPÄISCHE PATENTSCHRIFT

(11) **EP 3 201 484 B1**
(45) Veröffentlichungstag und Bekanntmachung des Hinweises auf die Patenterteilung: **06.11.2019**
(21) Anmeldenummer: 15781862.6
(22) Anmeldetag: 02.09.2015
(51) Int. Cl.: F16D 13/52, F16D 13/68

(54) **KUPPLUNGSEINRICHTUNG FÜR EIN KRAFTRAD SOWIE DREHMOMENTÜBERTRAGUNGSEINRICHTUNG ODER KUPPLUNG**
CLUTCH DEVICE FOR A MOTORCYCLE, AND A TORQUE TRANSMISSION DEVICE OR CLUTCH
DISPOSITIF D'ACCOUPLEMENT POUR MOTO ET ENSEMBLE DE TRANSMISSION DE COUPLE OU EMBRAYAGE

(30) Priorität: 01.10.2014 DE 102014219967
(43) Veröffentlichungstag der Anmeldung: 09.08.2017
(73) Patentinhaber: Schaeffler Technologies AG & Co. KG, 91074 Herzogenaurach (DE)
(72) Erfinder: ROY, Joydeep, Bangalore 3756003 (IN); DURAI, Ramesh, Vettavalam 606754 (IN); SURESH KRISHANASWAMY, Naig, Wakad, 41105 Pune (IN)
(86) Internationale Anmeldenummer: PCT/DE2015/200447
(87) Internationale Veröffentlichungsnummer: WO 2016/050239

(56) Entgegenhaltungen:
- DE-A1-102010 048 829
- DE-A1-102010 050 463

## Beschreibung

Die vorliegende Erfindung betrifft eine Kupplungseinrichtung gemäß dem Oberbegriff des Patentanspruchs 1, bevorzugt eine nass laufbare Kupplungseinrichtung, für eine Drehmomentübertragungseinrichtung eines Antriebsstrangs eines Fahrzeugs, insbesondere eines Kraftrads. Ferner betrifft die Erfindung eine Drehmomentübertragungseinrichtung oder eine Kupplung, insbesondere eine nass laufbare Kupplung, für einen Antriebsstrang eines Fahrzeugs, insbesondere eines Kraftrads.

Ein Verbrennungsmotor eines Kraftrads gibt für einen Fahrer nur in einem bestimmten Drehzahlbereich eine nutzbare Leistung ab. Um diesen Drehzahlbereich für verschiedene Fahrzustände des Kraftrads nutzen zu können, benötigt dieses ein automatisches oder ein manuell schaltbares Getriebe. Solch ein Getriebe ist über eine Kupplung mit dem Verbrennungsmotor mechanisch koppelbar. Aufgrund unterschiedlicher und auch gestiegener Anforderungen an Betätigungskräfte, an ein Leistungsverhalten und zu übertragende Motormomente der Kupplung, kommen eine Vielzahl von Kupplungen in den Antriebssträngen von Krafträdern zur Anwendung. So kommen beispielsweise trocken oder nass laufende Einscheiben- oder Lamellenkupplungen zur Anwendung, wobei diese als Einzel- oder Doppelkupplungen ausgebildet sein können.

Neben einer Hauptfunktion eines Verbindens und Trennens einer Kurbelwelle des Verbrennungsmotors oder einer Abtriebswelle eines Elektromotors mit und von einer Getriebeeingangswelle des Kraftrads, besitzt die Kupplung eine Reihe weiterer wichtiger Aufgaben. Sie soll ein weiches und ruckfreies Anfahren des Kraftrads ermöglichen, ein schnelles Schalten des Getriebes gewährleisten, Drehschwingungen des Verbrennungsmotors vom Getriebe fernhalten und so Rasselgeräusche und Verschleiß vermindern, als ein Überlastschutz für den (gesamten) Antriebsstrang, z. B. bei Schaltfehlern, dienen, sowie verschleißarm und möglichst einfach austauschbar sein. Hierbei soll die Kupplung bei einem geringen Bauraumverbrauch im Antriebsstrang möglichst kostengünstig in ihrer Herstellung, ihrer Montage und ihrem Betrieb sein.

Aufgrund eines Kostendrucks und eines angeforderten erhöhten Leistungsverhaltens bei permanent kleiner werdenden Bauräumen in den Antriebssträngen von Krafträdern treten zunehmend Angelegenheiten in einen Fokus der Entwickler, welche bis dato nur geringfügige bzw. einfach zu behebende Probleme verursachten. - Ein solcher Problembereich besteht bei vielen Kupplungseinrichtungen bei den vergleichsweise kleinen, zur Verfügung stehenden Bauräumen, wobei mittels der Kupplungseinrichtung trotzdem eine wenigstens ausreichende Schwingungsisolierung erzielt werden soll. Im Stand der Technik erfolgt eine Schwingungsisolierung in Krafträdern mittels einer Vielzahl von Lineardruckfedern, wobei typischerweise sechs vergleichsweise kurze Lineardruckfedern angewendet werden. Durch die geringe Länge der Lineardruckfedern müssen diese entsprechend steif ausgebildet sein, was sich negativ auf die Schwingungsisolierung auswirkt.

Eine auf den Oberbegriff des Patentanspruchs 1 lesbare Kupplungseinrichtung ist aus der DE 10 2010 048 829 A1 oder der DE 10 2010 050 463 A1 bekannt.

Es ist eine Aufgabe der Erfindung, eine verbesserte Kupplungseinrichtung für eine Drehmomentübertragungseinrichtung eines Antriebsstrangs eines Fahrzeugs, insbesondere eines Kraftrads, sowie eine entsprechend verbesserte Drehmomentübertragungseinrichtung oder eine entsprechend verbesserte Kupplung zur Verfügung zu stellen. - Hierbei soll bei einem vergleichsweise geringen Bauraumverbrauch eine vergleichsweise gute Schwingungsisolierung erzielbar sein, wobei darüber hinaus an den Kupplungskörben der Kupplungseinrichtung anliegende Drehungleichförmigkeiten ebenfalls bis zu einem gewissen Grad dämpfbar sein sollen. Ferner soll die erfindungsgemäße Kupplungseinrichtung möglichst kostengünstig in ihrer Herstellung, ihrer Montage und ihrem Betrieb sein.

Die Aufgabe der Erfindung ist mittels einer Kupplungseinrichtung, bevorzugt einer nass laufbaren Kupplungseinrichtung, für eine Drehmomentübertragungseinrichtung eines Antriebsstrangs eines Fahrzeugs, insbesondere eines Kraftrads, gemäß Anspruch 1; und mittels einer Drehmomentübertragungseinrichtung oder einer Kupplung, insbesondere einer nass laufbaren Kupplung, für einen Antriebsstrang eines Fahrzeugs, insbesondere eines Kraftrads, gemäß Anspruch 10 gelöst. Hierbei weist die erfindungsgemäße Drehmomentübertragungseinrichtung oder die erfindungsgemäße Kupplung, die erfindungsgemäße Kupplungseinrichtung, insbesondere die erfindungsgemäße nass laufbare Kupplungseinrichtung, auf. - Vorteilhafte Weiterbildungen, zusätzliche Merkmale und/oder Vorteile der Erfindung ergeben sich aus den abhängigen Ansprüchen und/oder der folgenden Beschreibung.

Unter einer Kupplungseinrichtung oder einer Kupplung soll im Folgenden generell ein Maschinenelement verstanden sein, welches einer mechanisch lösbaren Verbindung zweier bevorzugt koaxialer Wellen, insbesondere einer Abtriebs- und einer Antriebswelle eines Fahrzeugs, oder zweier bevorzugt koaxialer Maschinenelemente dient. Die erfindungsgemäße Kupplungseinrichtung für eine Kupplung kann dabei auf alle Antriebsstränge von Fahrzeugen, insbesondere auf Antriebsstränge von Kraft- bzw. Zweirädern (auch Trikes, Quads etc.), mit Benzin- oder Dieselmotor, bzw. auf sämtliche Drehmomentübertragungseinrichtungen angewendet werden. Bevorzugt ist die erfindungsgemäße Kupplungseinrichtung dabei als eine nass laufende Kupplungseinrichtung ausgebildet.

Die erfindungsgemäße Kupplungseinrichtung umfasst einen äußeren Kupplungskorb und einen inneren Kupplungskorb, wobei zwischen den beiden Kupplungskörben eine Dämpfereinrichtung vorgesehen ist. Gemäß der Erfindung weist die Dämpfereinrichtung der Kupplungseinrichtung wenigstens eine Bogenfeder auf. Die Bogenfeder dient einer Schwingungsisolierung und/oder einem Dämpfen von an den Kupplungskörben anliegenden Drehungleichförmigkeiten. In Ausführungsformen der Erfindung ist die Dämpfereinrichtung derart ausgebildet, dass mittels der wenigstens einen Bogenfeder ein Drehmoment direkt in einen der Kupplungskörbe einleitbar ist. Hierbei ist die Kupplungseinrichtung bevorzugt derart ausgebildet, dass bei sich schließender und/odergeschlossener Kupplungseinrichtung ein vom äußeren Kupplungskorb stammendes Drehmoment mittels der Dämpfereinrichtung direkt in den inneren Kupplungskorb einleitbar ist, bzw. vice versa.

Die Bogenfeder kann derart zwischen einer Dämpferlamelle der Kupplungseinrichtung und dem Kupplungskorb eingerichtet sein, dass ein an der Dämpferlamelle anliegendes Drehmoment mittels der Bogenfeder in den Kupplungskorb einleitbar ist. Hierbei kann die Bogenfeder in Axialrichtung und in Radialrichtung der Kupplungseinrichtung mittels der Dämpferlamelle und dem Kupplungskorb gelagert sein. Ferner ist mittels der Bogenfeder das Drehmoment in Umfangsrichtung der Kupplungseinrichtung schwingungsgedämpft von der Dämpferlamelle in den Kupplungskorb einleitbar. Gemäß der Erfindung kann die Dämpferlamelle einstückig, stofflich einstückig oder integral ausgebildet sein. Ferner kann der innere Kupplungskorb ebenfalls einstückig, stofflich einstückig oder integral ausgebildet sein.

Erfindungsgemäß weist die Dämpferlamelle zum Aufnehmen der Bogenfeder ein Bogenfederfenster auf, wobei das Bogenfederfenster bevorzugt als ein Axialfenster ausgebildet ist, welches insbesondere von einem stangenförmigen Umfangsabschnitt und einem plattenförmigen Umfangsabschnitt der Dämpferlamelle begrenzt ist. Hierbei kann das Axialfenster der Dämpferlamelle für das Aufnehmen der Bogenfeder radial innen zugänglich sein. Erfindungsgemäß weist der innere Kupplungskorb zum Aufnehmen der Bogenfeder ein Bogenfederfenster auf, wobei das Bogenfederfenster bevorzugt als ein Radialfenster ausgebildet ist, welches insbesondere von zwei radialen Innenrändern des inneren Kupplungskorbs begrenzt ist. Hierbei kann das Radialfenster des inneren Kupplungskorbs für das Aufnehmen der Bogenfeder axial seitlich zugänglich sein. Darüber hinaus ist die Bogenfeder in Umfangsrichtung bevorzugt mittels der Dämpferlamelle und dem Kupplungskorb gelagert.

Gemäß der Erfindung kann eine durch das Bogenfederfenster der Dämpferlamelle konstituierte Fläche im Wesentlichen senkrecht auf einer Fläche stehen, welche durch das Bogenfederfenster des inneren Kupplungskorbs konstituiert ist. Hierbei kann die durch das Bogenfederfenster der Dämpferlamelle konstituierte Fläche im Wesentlichen eine Mantelfläche eines Hohlzylinders und die durch das Bogenfederfenster des inneren Kupplungskorbs konstituierte Fläche im Wesentlichen eine Ebene sein, welche den Hohlzylinder im Wesentlichen senkrecht schneidet. Zwischen dem inneren Kupplungskorb und der Dämpferlamelle kann eine Reiblamelle, insbesondere eine außenseitige Reiblamelle, vorgesehen sein. Ferner kann die Kupplungseinrichtung in Axialrichtung davon abseits bevorzugt wenigstens eine weitere Reiblamelle aufweisen, wobei sich bevorzugt wenigstens eine außenseitige Reiblamelle und wenigstens eine innenseitige Reiblamelle anschließen.

Für ein gegenseitiges Verdrehen der Dämpferlamelle und des inneren Kupplungskorbs bei im Wesentlichen geöffneter Kupplungseinrichtung, kann ein Umfangsanschlag des Bogenfederfensters des inneren Kupplungskorbs in Radialrichtung außen über und/oder in Radialrichtung innen unter das Bogenfederfenster der Dämpferlamelle bewegbar sein. Ferner kann für das gegenseitige Verdrehen ein Umfangsanschlag des Bogenfederfensters der Dämpferlamelle in den inneren Kupplungskorb, insbesondere in einen in Umfangsrichtung verlaufenden Federschlitz des inneren Kupplungskorbs, hineinbewegbar sein. Gemäß der Erfindung kann die Dämpferlamelle als eine insbesondere vollwertige Reiblamelle der Kupplungseinrichtung ausgebildet sein. Ferner kann der innere Kupplungskorb einen Reiblamellenabschnitt aufweisen. Bevorzugt umfasst die Dämpfereinrichtung genau zwei oder genau drei Bogenfedern aufweist.

Die Erfindung ist im Folgenden anhand von Ausführungsbeispielen einer Variante unter Bezugnahme auf die beigefügte detaillierte aber nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und in den Figuren der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu der dargestellten Ausführungsform und/oder den erläuterten Ausführungsformen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer dreidimensionalen Explosionsansicht eine Ausführungsform einer erfindungsgemäßen Kupplungseinrichtung mit einer erfindungsgemäßen Dämpfereinrichtung für eine erfindungsgemäße Drehmomentübertragungseinrichtung eines Kraftrads;
- Fig. 2: eine zweidimensionale Stirnseitenansicht einer zusammengebauten Kupplungseinrichtung ohne außenseitige Reiblamellen, wobei ein außen an der Kupplungseinrichtung vorgesehener, stangenförmiger Umfangsabschnitt einer Dämpferlamelle der Kupplungseinrichtung weggeschnitten ist;
- Fig. 3: eine entlang einer Axialrichtung und einer Radialrichtung der Kupplungseinrichtung zentral geschnittene Perspektivansicht der Kupplungseinrichtung aus Fig. 2, wobei ein äußerer Kupplungskorb und außenseitige Reiblamellen der Kupplungseinrichtung weggelassen sind; und
- Fig. 4: eine entlang der Axialrichtung und einer Radialrichtung geschnitten dargestellte Perspektivansicht der Dämpfereinrichtung zwischen der Dämpferlamelle und einem inneren Kupplungskorb der Kupplungseinrichtung, wobei eine Bogenfeder in zwei Bogenfederfenster der Dämpfereinrichtung eingehängt ist.

Die Erfindung ist im Folgenden anhand von Ausführungsformen (siehe auch die Zeichnung, welche jedoch nur eine einzige spezielle Ausführungsform der Erfindung darstellt) einer Variante einer nass laufenden Kupplungseinrichtung 10 für eine Drehmomentübertragungseinrichtung 1 eines Fahrzeugs näher erläutert. Die Erfindung ist jedoch nicht auf eine solche Variante und/oder die nachfolgend erläuterten Ausführungsformen beschränkt, sondern ist von grundlegenderer Natur, sodass sie auf sämtliche Kupplungseinrichtungen 10 im Sinne der Erfindung angewendet werden kann. - Obwohl die Erfindung im Detail durch bevorzugte Ausführungsbeispiele näher illustriert und beschrieben ist, so ist die Erfindung durch diese offenbarten Beispiele nicht eingeschränkt. Andere Variationen können hieraus abgeleitet werden, ohne den Schutzumfang der Erfindung zu verlassen.

Die Erläuterung der Erfindung bezieht sich dabei auf eine Axialrichtung Ax, eine Rotationsachse Ax, eine Radialrichtung Ra und eine Umfangsrichtung Um der bevorzugt als eine Lamellenkupplungseinrichtung 10 ausgebildeten erfindungsgemäßen Kupplungseinrichtung 10 für das Fahrzeug, insbesondere für einen Antriebsstrang eines Kraft- bzw. Zweirads mit Verbrennungsmotor. Diese Lageangaben beziehen sich z. B. auch auf einen betreffenden Abschnitt eines Antriebsstrangs des Kraft- bzw. Zweirads, die Drehmomentübertragungseinrichtung 1, eine Getriebeeingangswelle eines Getriebes etc. Hierbei ist die Kupplungseinrichtung 10 bevorzugt als eine Einfachkupplungseinrichtung 10 ausgebildet.

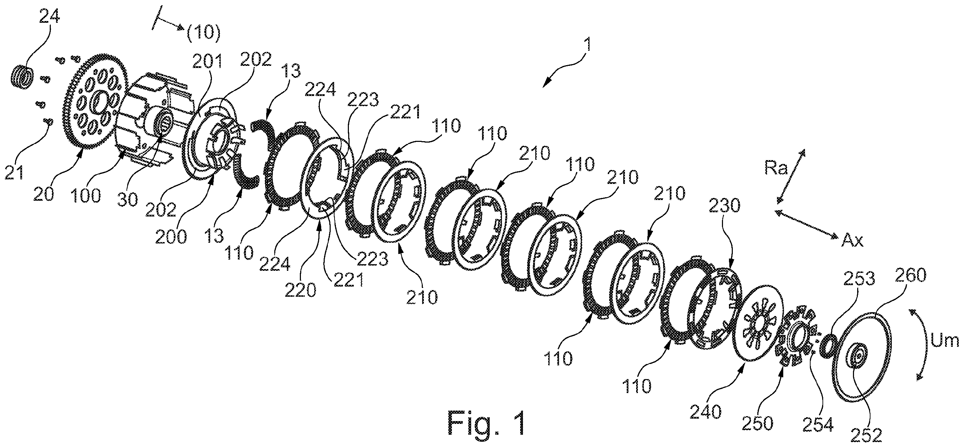

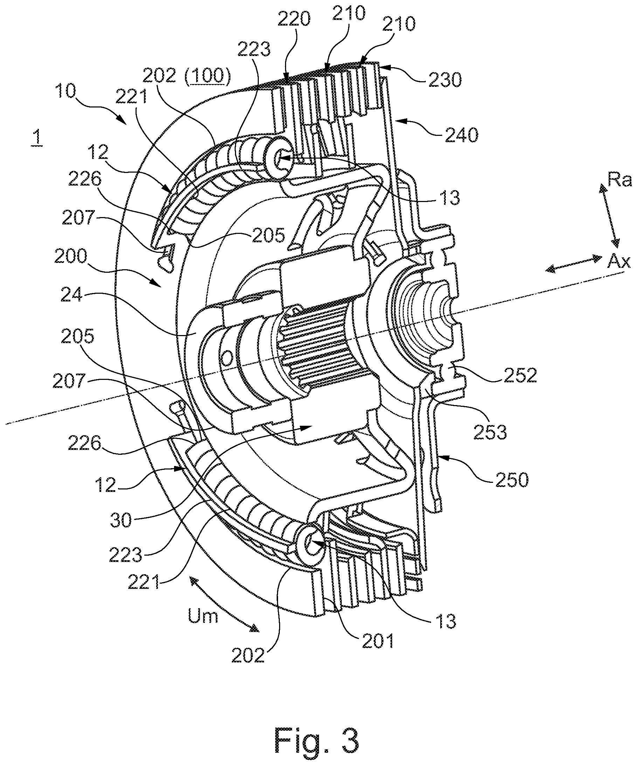

Die in der Zeichnung dargestellte erfindungsgemäße Kupplungseinrichtung 10 umfasst antriebsseitig im Wesentlichen (siehe Fig. 1 und 3) ein Antriebszahnrad 20, welches mit einem äußeren Kupplungskorb 100 drehfest verbunden ist, sowie bevorzugt eine Mehrzahl von in den äußeren Kupplungskorb 100 drehfest eingehängten außenseitigen Reiblamellen 110, wobei eine außenseitige Reiblamelle 110 bevorzugt beidseitig einen Reibbelag aufweist. Abtriebsseitig umfasst die erfindungsgemäße Kupplungseinrichtung 10 eine mit einer Getriebeeingangswelle drehfest verbindbare Nabe 30 die ihrerseits drehfest mit einem inneren Kupplungskorb 200 verbunden ist, welcher innenseitige Reiblamellen 210 trägt, welche bevorzugt als Stahllamellen 210 ausgebildet sind. Ferner weist der innere Kupplungskorb 200 bevorzugt einen Reiblamellenabschnitt 201 auf.

Innerhalb der Kupplungseinrichtung 10 wechseln sich die außenseitigen Reiblamellen 110 mit den innenseitigen Reiblamellen 210 ab. Gemäß der dargestellten Ausführungsform sind nicht alle innenseitigen Reiblamellen 210 mit dem inneren Kupplungskorb 200 drehfest verbunden. Vielmehr ist nur der Reiblamellenabschnitt 210 mit dem inneren Kupplungskorb 200 bevorzugt integral ausgebildet und kann so ein Drehmoment über den inneren Kupplungskorb 200 auf die Nabe 30 übertragen. Die einander benachbarten innenseitigen Reiblamellen 210 übertragen hingegen das Drehmoment über einstückig mit den innenseitigen Reiblamellen 210 ausgebildeten Verbindungselementen. Hierbei können die innenseitigen Reiblamellen 210 - abgesehen von einer Dämpferlamelle 220 (siehe unten) - und die außenseitigen Reiblamellen 110 jeweils alle gleicher Bauart sein.

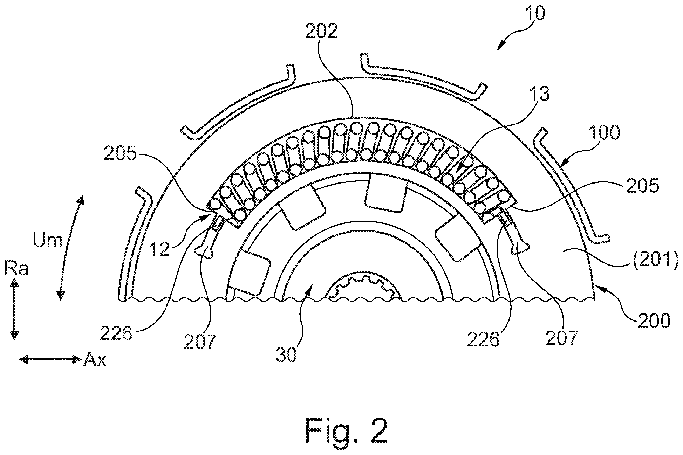

Gemäß der Erfindung weist die Kupplungseinrichtung 10 eine Dämpfereinrichtung 12 mit wenigstens einer, bevorzugt jedoch zwei Bogenfedern 13 auf. Die betreffende Bogenfeder 13 ist dabei insbesondere als eine als eine Druckfeder 13 ausgebildete Spiralbogenfeder 13 konzipiert. Die Dämpfereinrichtung 12 bzw. die Bogenfedern 13 liegt bzw. liegen dabei in einem Momentenfluss durch die Kupplungseinrichtung 10 zwischen dem antriebsseitigen Kupplungskorb 100 und dem abtriebsseitigen Kupplungskorb 200 (vgl. Fig. 2 und 3). Hierfür sind die Bogenfedern 13 zwischen dem Reiblamellenabschnitt 201 des inneren Kupplungskorbs 200 und der axial dazu benachbarten, als Dämpferlamelle 220 ausgebildeten, innenseitigen Reiblamelle 220 vorgesehen. Hierbei ist die Dämpferlamelle 220 wiederum bevorzugt als eine Stahllamelle 220 ausgebildet. Zwischen dem Reiblamellenabschnitt 210 und der Dämpferlamelle 220 kann eine außenseitige Reiblamelle 110 (vgl. Fig. 1) vorgesehen sein.

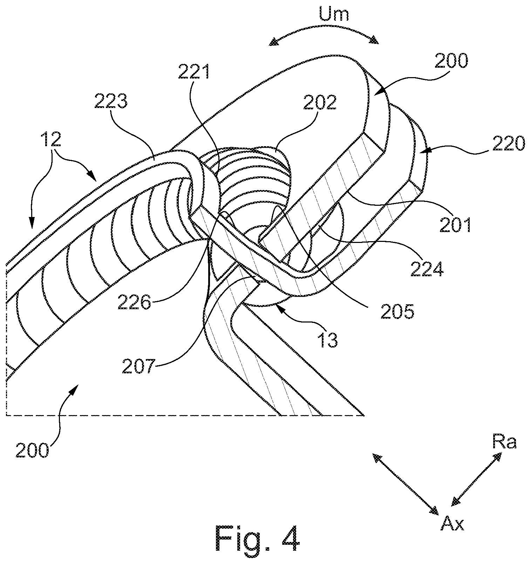

Gemäß der Erfindung ist eine betreffende Bogenfeder 13 in zwei sich in Umfangsrichtung Um erstreckenden Bogenfederfenstern 202, 221 aufgenommen, wobei ein Bogenfederfenster 202 bevorzugt als ein Radialfenster 202 und ein Bogenfederfenster 221 bevorzugt als ein Axialfenster 221 ausgebildet ist. Hierbei decken die beiden Bogenfederfenster 202, 221 bevorzugt im Wesentlichen einen gleichen Winkelbereich in Umfangsrichtung Um ab (vgl. Fig. 2). Das im inneren Kupplungskorb 200 eingerichtete Radialfenster 202 ist am Besten in der Fig. 2 und das in der Dämpferlamelle 220 eingerichtete Axialfenster 221 ist am Besten in der Fig. 4 zu erkennen. Bevorzugt steht dabei das Radialfenster 202 in Umfangsrichtung Um auf dem Axialfenster 221 senkrecht (Fig. 4).

Hierbei ist es bevorzugt, dass das Radialfenster 202 des inneren Kupplungskorbs 200 in Radialrichtung Ra innen und in Radialrichtung Ra außen jeweils von einem inneren Umfangsrand des inneren Kupplungskorbs 200 und in beide Umfangsrichtungen Um jeweils von einem Anschlag 205 begrenzt ist. Ferner ist es bevorzugt, dass das Axialfenster 221 der Dämpferlamelle 220 in eine Axialrichtung Ax von einem vorderen Umfangsabschnitt 223 und in die entgegengesetzte Axialrichtung Ax von einem hinteren Umfangsabschnitt 224, und in beide Umfangsrichtungen Um jeweils von einem Anschlag 226 begrenzt ist. Bevorzugt ist der vordere Umfangsabschnitt 223 der Dämpferlamelle 220 ein mittels der Anschläge 226 in Axialrichtung Ax nach vorne ausgelagerter, stangenförmiger Umfangsabschnitt 223. Und der hintere Umfangsabschnitt 224 ist bevorzugt als ein in Radialrichtung Ra nach innen verlaufender Umfangsabschnitt 224 ausgebildet.

In einer, z. B. momentfreien, Ruheposition der Kupplungseinrichtung 10 (siehe insbesondere die Fig. 2 und 4) ist dementsprechend die betreffende Bogenfelder 13 von den inneren Umfangsrändern und den Anschlägen 205 des inneren Kupplungskorbs 200 sowie von den Umfangsabschnitten 223, 224 und den Anschlägen 226 der Dämpferlamelle 220 zwischen dem inneren Kupplungskorb 200 und der Dämpferlamelle 220 (in den beiden Bogenfederfenstern 202, 221) aufgenommen. Hierbei durchgreift der vordere Umfangsabschnitt 223 der Dämpferlamelle 220 mit seinen beiden Anschlägen 226 den inneren Kupplungskorb 200 bevorzugt in einem Bereich seines Bogenfederfensters 202, wobei die Anschläge 226 ferner das Bogenfederfenster 202 des inneren Kupplungskorbs 200 in der Ruheposition der Kupplungseinrichtung 10 begrenzen (Fig. 2).

Gemäß der Erfindung ist die Dämpferlamelle 220 gegenüber dem inneren Kupplungskorb 200 bzw. ist der innere Kupplungskorb 200 gegenüber der Dämpferlamelle 220 verdrehbar, wobei eine gegenseitige Verdrehung von einer Federkraft der Bogenfeder 13 behindert wird. D. h. ein von der Dämpferlamelle 220 stammendes Drehmoment wird zunächst auf die Bogenfeder 13 und durch diese schwingungs- und/oder drehungleichförmigkeitsgedämpft in/auf den inneren Kupplungskorb 200 übertragen. Eine gegenseitige Verdrehbarkeit kann z. B. ca. ±5°, ca. ±6°, ca. ±7°, ca. ±8°, ca. ±9°, ca. ±10°, ca. ±12°, ca. ±14°, ca. ±16°, ca. ±18°, ca. ±20°, ca. ±25°, ca. ±30°, ca. ±35°, ca. ±40°, ca. ±45° oder mehr betragen. Bevorzugt ist die gegenseitige maximale Verdrehbarkeit durch eine Länge der im Folgenden beschriebenen Schlitze 207 am Bogenfederfensters 202 des inneren Kupplungskorbs 200 gegeben.

Damit sich die Dämpferlamelle 220 gegenüber dem inneren Kupplungskorb 200 und vice versa verdrehen kann, weist der innere Kupplungskorb 200, bevorzugt ausgehend von den Anschlägen 205 des Bogenfederfensters 202, in bevorzugt beide Umfangsrichtungen Um wegerstreckend, Schlitze 207 für einen Federweg der Dämpferlamelle 220 gegenüber dem inneren Kupplungskorb 200 auf. Da ein solcher Schlitz 207 einer abgefederten Bewegung der Dämpferlamelle 220 gegenüber dem inneren Kupplungskorb 200 und vice versa dient, kann der betreffende Schlitz 207 auch als Federschlitz 207 bezeichnet sein. Im betreffenden Federschlitz 207 ist dabei der jeweilige Anschlag 226 des Bogenfederfensters 221 der Dämpferlamelle 220 aufgenommen, wobei sich der Anschlag 226 in Umfangsrichtung Um entlang des Federschlitzes 207 im Federschlitz 207 bewegen kann.

Hierdurch ist die gegenseitige bedingte Verdrehbarkeit (siehe oben) der Dämpferlamelle 220 und des inneren Kupplungskorbs 200 gegeben. Bei einer gegenseitigen Verdrehung bewegt sich das eine Bogenfederfenster 202/221 in eine Umfangsrichtung Um gegenüber dem anderen Bogenfederfenster 221/202, wobei die dazwischen befindliche Bogenfeder 13 von den Anschlägen 205, 226 komprimiert wird. Hierbei verringert sich der gemeinsam von den Bogenfederfenstern 202, 221 aufgespannte Raum, welcher in der z. B. momentfreien Ruheposition der Kupplungseinrichtung 10 bevorzugt am größten ist.

Gemäß der Erfindung kann eine Bogenfeder 13 angewendet werden, welche in einem Vergleich mit einer vergleichsweise kurzen Linearfeder eine geringere Steifigkeit besitzen kann und einen größeren Verdrehwinkel zwischen der Dämpferlamelle 220 und dem inneren Kupplungskorb 200 erlaubt. Hierdurch ergibt sich eine verbesserte Isolation von Schwingungen und/oder Drehungleichförmigkeiten, d. h. darüber hinaus ein verbessertes NVH Verhalten (NVH: Noise, Vibration, Harshness; Schwingungs- und Geräuschanforderungen). Da gegenüber dem Stand der Technik weniger Federn notwendig sind verringern sich Werkzeug- und somit Produktkosten. Ferner ergeben sich geringere Montagekosten, da weniger Federn montiert werden müssen, welche darüber hinaus vergleichsweise einfach montierbar sind. Des Weiteren kann das Material der Kupplungseinrichtung 10 bzw. des inneren Kupplungskorbs 200 und der Dämpferlamelle 220 besser ausgenutzt werden.

### Bezugszeichenliste

- 1: Drehmomentübertragungseinrichtung für ein Fahrzeug, bevorzugt ein Kraftbzw. Zweirad, mit Verbrennungsmotor, insbesondere nass laufende Kupplung, mit Dämpfereinrichtung 12
- 10: Kupplungseinrichtung, insbesondere Einfachkupplungseinrichtung, Reibkupplungseinrichtung, Lamellenkupplungseinrichtung
- 12: Dämpfereinrichtung
- 13: Bogenfeder, Spiralbogenfeder, (Bogen-)Druckfeder
- 20: Antriebszahnrad, bevorzugt Außenrad
- 21: Niet
- 24: (Schmier-)Buchse
- 30: (Abtriebs-)Nabe bevorzugt mit Getriebeeingangswelle drehfest verbindbar
- 100: (äußerer, antriebsseitiger/abtriebsseitiger) Kupplungskorb, Außenkorb
- 110: (außenseitige) Reiblamelle, Außenlamelle, bevorzugt mit Reibbelag
- 200: (innerer, abtriebsseitiger/antriebsseitiger) Kupplungskorb, Innenkorb bevorzugt mit Reiblamellenabschnitt 201
- 201: Reiblamellenabschnitt
- 202: (radiales) Bogenfederfenster, Radialfenster, (Radial-)Bogenfederhalter
- 205: Anschlag in Umfangsrichtung Um, Umfangsanschlag des Bogenfederfensters 202
- 207: Schlitz für Federweg der Dämpferlamelle 220, Federschlitz
- 210: (innenseitige) Reiblamelle, Innenlamelle, bevorzugt Stahllamelle
- 220: (innenseitige) Reiblamelle, Dämpferlamelle, Innenlamelle, bevorzugt Stahllamelle
- 221: (axiales) Bogenfederfenster, Axialfenster, (Axial-)Bogenfederhalter
- 223: (vorderer) Umfangsabschnitt, bevorzugt stangenförmig
- 224: (hinterer) Umfangsabschnitt, bevorzugt plattenförmig
- 226: Anschlag in Umfangsrichtung Um, Umfangsanschlag des Bogenfederfensters 221
- 230: Lagerplatte
- 240: Tellerfeder, Membranfeder
- 250: Abstützscheibe
- 252: Betätigungslager, Ausrücklager (bevorzugt) oder Einrücklager
- 253: Buchse
- 254: Stift
- 260: Ring

- Ax: Axialrichtung, Längsrichtung, Rotationsachse der Drehmomentübertragungseinrichtung 1, der Kupplungseinrichtung 10, der Getriebeeingangswelle etc., axial
- Ra: Radialrichtung der Drehmomentübertragungseinrichtung 1, der Kupplungseinrichtung 10, der Getriebeeingangswelle etc., radial
- Um: Umfangsrichtung, Umfang der Drehmomentübertragungseinrichtung 1, der Kupplungseinrichtung 10, der Getriebeeingangswelle etc., (Relativ-)Drehbewegungen bzw. Rotationsbewegungen finden im Umfangsrichtung Um statt, tangential

## Patentansprüche

1. Kupplungseinrichtung für eine Drehmomentübertragungseinrichtung (1) eines Antriebsstrangs eines Fahrzeugs, umfassend einen in Radialrichtung (Ra) äußeren Kupplungskorb (100) und einen in Radialrichtung (Ra) inneren Kupplungskorb (200), wobei zwischen den beiden Kupplungskörben (100, 200) eine Dämpfereinrichtung (12) mit zumindest einer Dämpferlamelle (220) vorgesehen ist, und die Dämpfereinrichtung (12) wenigstens eine Bogenfeder (13) zum Dämpfen von an den Kupplungskörben (100, 200) anliegenden Drehungleichförmigkeiten aufweist, **dadurch gekennzeichnet, dass** der innere Kupplungskorb (200) und/oder die Dämpferlamelle (220) zum Aufnehmen der Bogenfeder (13) ein Bogenfederfenster (202, 221) aufweist.

2. Kupplungseinrichtung gemäß Anspruch 1, **dadurch gekennzeichnet, dass** die Dämpfereinrichtung (12) derart ausgebildet ist, dass mittels der wenigstens einen Bogenfeder (13) ein Drehmoment direkt in einen der Kupplungskörbe (100/200) einleitbar ist, wobei die Kupplungseinrichtung (10) bevorzugt derart ausgebildet ist, dass bei geschlossener Kupplungseinrichtung (10) ein vom äußeren Kupplungskorb (100) stammendes Drehmoment mittels der Dämpfereinrichtung (12) direkt in den inneren Kupplungskorb (200) einleitbar ist.

3. Kupplungseinrichtung gemäß Anspruch 1 oder 2, **dadurch gekennzeichnet, dass** die Bogenfeder (13) derart zwischen der Dämpferlamelle (220) und dem Kupplungskorb (100/200) eingerichtet ist, dass ein an der Dämpferlamelle (220) anliegendes Drehmoment mittels der Bogenfeder (13) in den Kupplungskorb (100/200) einleitbar ist, wobei bevorzugt, die Bogenfeder (13) in Axialrichtung (Ax) und in Radialrichtung (Ra) der Kupplungseinrichtung (10) mittels der Dämpferlamelle (220) und des Kupplungskorbs (100/200) gelagert ist und mittels der Bogenfeder (13) das Drehmoment in Umfangsrichtung (Um) der Kupplungseinrichtung (10) schwingungsgedämpft von der Dämpferlamelle (220) in den Kupplungskorb (100/200) einleitbar ist.

4. Kupplungseinrichtung gemäß einem der Ansprüche 1 bis 3, **dadurch gekennzeichnet, dass** das Bogenfederfenster (221) der Dämpferlamelle (220) als Axialfenster (221) ausgebildet ist, welches von einem stangenförmigen Umfangsabschnitt (223) und einem plattenförmigen Umfangsabschnitt (224) der Dämpferlamelle (220) begrenzt ist.

5. Kupplungseinrichtung gemäß einem der Ansprüche 1 bis 4, **dadurch gekennzeichnet, dass** das Bogenfederfenster (202) des inneren Kupplungskorbs (200) als Radialfenster (202) ausgebildet ist, welches von zwei radialen Innenrändern des inneren Kupplungskorbs (200) begrenzt ist.

6. Kupplungseinrichtung gemäß einem der Ansprüche 1 bis 5, **dadurch gekennzeichnet, dass** eine durch das Bogenfederfenster (221) der Dämpferlamelle (220) konstituierte Fläche im Wesentlichen senkrecht auf einer Fläche steht, welche durch das Bogenfederfenster (202) des inneren Kupplungskorbs (200) konstituiert ist, wobei die durch das Bogenfederfenster (221) der Dämpferlamelle (220) konstituierte Fläche bevorzugt eine Mantelfläche eines Hohlzylinders und die durch das Bogenfederfenster (202) des inneren Kupplungskorbs (200) konstituierte Fläche bevorzugt eine Ebene ist, welche den Hohlzylinder im Wesentlichen senkrecht schneidet.

7. Kupplungseinrichtung gemäß einem der Ansprüche 1 bis 6, **dadurch gekennzeichnet, dass** für ein gegenseitiges Verdrehen der Dämpferlamelle (220) und des inneren Kupplungskorbs (200) bei im Wesentlichen geöffneter Kupplungseinrichtung (10) ein Umfangsanschlag (205) des Bogenfederfensters (202) des inneren Kupplungskorbs (200) in Radialrichtung (Ra) außen über und/oder in Radialrichtung (Ra) innen unter das Bogenfederfenster (221) der Dämpferlamelle (220) bewegbar ist, und/oder ein Umfangsanschlag (226) des Bogenfederfensters (221) der Dämpferlamelle (220) in den inneren Kupplungskorb (200), insbesondere in einen in Umfangsrichtung (Um) verlaufenden Federschlitz (207) des inneren Kupplungskorbs (200), hineinbewegbar ist.

8. Kupplungseinrichtung gemäß einem der Ansprüche 1 bis 7, **dadurch gekennzeichnet, dass** zwischen dem inneren Kupplungskorb (200) und der Dämpferlamelle (220) eine Reiblamelle (110, 210), insbesondere eine außenseitige Reiblamelle (110), vorgesehen ist, und die Kupplungseinrichtung (10) in Axialrichtung (Ax) davon abseits wenigstens eine weitere Reiblamelle (110, 210) aufweist, wobei sich bevorzugt wenigstens eine außenseitige Reiblamelle (110) und wenigstens eine innenseitige Reiblamelle (210) anschließen.

9. Kupplungseinrichtung gemäß Ansprüche 4, 5 und 7 **dadurch gekennzeichnet, dass**:
• die Dämpferlamelle (220) einstückig, stofflich einstückig oder integral ausgebildet ist;
• die Dämpferlamelle (220) als eine vollwertige Reiblamelle (220) der Kupplungseinrichtung (10) ausgebildet ist;
• die Bogenfeder (13) ferner in Umfangsrichtung (Um) mittels der Dämpferlamelle (220) und dem Kupplungskorb (100/200) gelagert ist;
• das Axialfenster (221) der Dämpferlamelle (220) für das Aufnehmen der Bogenfeder (13) radial innen zugänglich ist;
• der innere Kupplungskorb (200) einen Reiblamellenabschnitt (201) aufweist;
• der innere Kupplungskorb (200) einstückig, stofflich einstückig oder integral ausgebildet ist;
• das Radialfenster (202) des inneren Kupplungskorbs (200) für das Aufnehmen der Bogenfeder (13) axial seitlich zugänglich ist;
• die Dämpfereinrichtung (12) genau zwei oder genau drei Bogenfedern (13) aufweist; und/oder
• der Federschlitz (207) sich ca. 5° bis ca. 20°, bevorzugt ca. 7,5° bis ca. 15° oder insbesondere ca. 10° bis ca. 12,5° in Umfangsrichtung (Um) erstreckt.

10. Drehmomentübertragungseinrichtung oder Kupplung, insbesondere nass laufbare Kupplung (1), für einen Antriebsstrang eines Kraftrads, mit einer Kupplungseinrichtung (10), insbesondere einer nass laufbaren Kupplungseinrichtung (10), nach einem der Ansprüche 1 bis 9.

## Claims

1. A clutch device for a torque transmission device (1) of a drive train of a vehicle, comprising an outer clutch basket (100) in a radial direction (Ra) and an inner clutch basket (200) in a radial direction (Ra), wherein, between the two clutch baskets (100, 200), there is provided a damping device (12) with at least one damper blade (220), and the damping device (12) has at least one bow spring (13) for damping rotational irregularities applied to the clutch baskets (100, 200), **characterised in that** the inner clutch basket (200) and/or the damper blade (220) for receiving the bow spring (13) has a bow spring window (202, 221).

2. The clutch device according to claim 1, **characterised in that** the damping device (12) is designed such that, by means of the at least one bow spring (13), a torque can be introduced directly into one of the clutch baskets (100/200), wherein the clutch device (10) is preferably formed such that, when the clutch device (10) is closed, a torque originating from the outer clutch basket (100) can be introduced directly into the inner clutch basket (200) by means of the damping device (12).

3. The clutch device according to claim 1 or 2, **characterised in that** the bow spring (13) between the damper blade (220) and the clutch basket (100/200) is aligned such that a torque applied to the damper blade (220) by means of the bow spring (13) can be introduced into the clutch basket (100/200), wherein preferably the bow spring (13) is supported in the axial direction (Ax) and in the radial direction (Ra) of the clutch device (10) by means of the damper blade (220) and the clutch basket (100/200), and by means of the bow spring (13), the torque in the circumferential direction (Um) of the clutch device (10) can be introduced into the clutch basket (100/200) such that vibrations are dampened by the damper blade (220).

4. The clutch device according to any one of claims 1 to 3, **characterised in that** the bow spring window (221) of the damper blade (220) is formed as an axial window (221) which is limited by a rod-shaped peripheral portion (223) and a plate-shaped peripheral portion (224) of the damper blade (220).

5. The clutch device according to any one of claims 1 to 4, **characterised in that** the bow spring window (202) of the inner clutch basket (200) is formed as a radial window (202) which is bounded by two radial inner edges of the inner clutch basket (200).

6. The clutch device according to any one of claims 1 to 5, **characterised in that** a surface constituted by the bow spring window (221) of the damper blade (220) is substantially perpendicular to a surface which is constituted by the bow spring window (202) of the inner clutch basket (200), wherein the surface constituted by the bow spring window (221) of the damper blade (220) is preferably a shell surface of a hollow cylinder, and the surface constituted by the bow spring window (202) of the inner clutch basket (200) is preferably a plane intersecting the hollow cylinder substantially perpendicularly.

7. The clutch device according to any one of claims 1 to 6, **characterised in that**, for a reciprocal rotation of the damper blade (220) and of the inner clutch basket (200) with a substantially opened clutch device (10), a circumferential stop (205) of the bow spring window (202) of the inner clutch basket (200) is movable in the radial direction (Ra) outside over and/or in the radial direction (Ra) inside under the bow spring window (221) of the damper blade (220), and/or a peripheral stop (226) of the bow spring window (221) of the damper blade (220) is movable into the inner clutch basket (200), in particular into a circumferentially (Um) extending spring slot (207) of the inner clutch basket (200).

8. The clutch device according to any one of claims 1 to 7, **characterised in that** a friction plate (110, 210), in particular an outer side friction plate (110), is provided between the inner clutch basket (200) and the damper blade (220), and the clutch device (10) has at least one further friction plate (110, 210) apart therefrom in the axial direction (Ax), wherein preferably at least one outer side friction plate (110) and at least one inner side friction plate (210) are joined.

9. The clutch device according to claims 4, 5, and 7, **characterised in that**:
• the damper blade (220) is integral, materially integral, or integrally formed;
• the damper blade (220) is formed as a fully-fledged friction plate (220) of the clutch device (10);
• the bow spring (13) is also supported in the circumferential direction (Um) by means of the damper blade (220) and the clutch basket (100/200);
• the axial window (221) of the damper blade (220) for receiving the bow spring (13) is accessible radially inwardly;
• the inner clutch basket (200) has a friction plate portion (201);
• the inner clutch basket (200) is integral, materially integral, or integrally formed;
• the radial window (202) of the inner clutch basket (200) for receiving the bow spring (13) is accessible axially laterally;
• the damping device (12) has exactly two or exactly three bow springs (13); and or
• the spring slot (207) extends approximately 5° to approximately 20°, preferably approximately 7.5° to approximately 15°, or in particular approximately 10° to approximately 12.5°, in the circumferential direction (Um).

10. A torque transmission device or clutch, in particular wet-running clutch (1), for a drive train of a motorcycle, having a clutch device (10), in particular a wet-running clutch device (10), according to any one of claims 1 to 9.

## Revendications

1. Dispositif d'accouplement pour un ensemble de transmission de couple (1) d'un groupe motopropulseur d'un véhicule, comprenant une cloche d'embrayage externe (100) dans le sens radial (Ra) et une cloche d'embrayage interne (200) dans le sens radial (Ra), entre les deux cloches d'embrayage (100, 200) un dispositif amortisseur (12) muni d'au moins une lame d'amortisseur (220) étant prévu et le dispositif amortisseur (12) comprenant au moins un ressort en arc (13) pour amortir les irrégularités de rotation appliquées aux cloches d'embrayage (100, 200), **caractérisé en ce que** la cloche d'embrayage interne (200) et/ou la lame d'amortisseur (220) présente, pour recevoir le ressort en arc (13), une fenêtre de ressort en arc (202, 221).

2. Dispositif d'accouplement selon la revendication 1, **caractérisé en ce que** le dispositif amortisseur (12) est conçu de telle sorte qu'au moyen du au moins un ressort en arc (13), un couple peut être introduit directement dans l'une des cloches d'embrayage (100/200), le dispositif d'accouplement (10) étant de préférence conçu de telle sorte que, lorsque le dispositif d'accouplement (10) est fermé, un couple provenant de la cloche d'embrayage externe (100) puisse être introduit directement dans la cloche d'embrayage interne (200) au moyen du dispositif amortisseur (12).

3. Dispositif d'accouplement selon la revendication 1 ou 2, **caractérisé en ce que** le ressort en arc (13) est situé entre la lame d'amortisseur (220) et la cloche d'embrayage (100/200) de telle sorte qu'un couple appliqué à la lame d'amortisseur (220) puisse être introduit dans la cloche d'embrayage (100/200) au moyen du ressort en arc (13), le ressort en arc (13) étant disposé de préférence dans le sens axial (Ax) et dans le sens radial (Ra) du dispositif d'accouplement (10) au moyen de la lame d'amortisseur (220) et de la cloche d'embrayage (100/200) et, au moyen du ressort en arc (13), le couple dans le sens périphérique (Um) du dispositif d'accouplement (10) pouvant être introduit de la lame d'amortisseur (220) dans la cloche d'embrayage (100/200) avec ses oscillations amorties.

4. Dispositif d'accouplement selon l'une quelconque des revendications 1 à 3, **caractérisé en ce que** la fenêtre de ressort en arc (221) de la lame d'amortisseur (220) est formée en tant que fenêtre axiale (221), laquelle est délimitée par une partie périphérique en forme de tige (223) et une partie périphérique en forme de plaque (224) de la lame d'amortisseur (220).

5. Dispositif d'accouplement selon l'une quelconque des revendications 1 à 4, **caractérisé en ce que** la fenêtre de ressort en arc (202) de la cloche d'embrayage interne (200) est formée en tant que fenêtre radiale (202), qui est délimitée par deux bords internes radiaux de la cloche d'embrayage interne (200).

6. Dispositif d'accouplement selon l'une quelconque des revendications 1 à 5, **caractérisé en ce qu'**une surface constituée par la fenêtre de ressort en arc (221) de la lame d'amortisseur (220) est sensiblement perpendiculaire à une surface constituée par la fenêtre de ressort en arc (202) de la cloche d'embrayage interne (200), la surface constituée par la fenêtre de ressort en arc (221) de la lame d'amortisseur (220) étant de préférence une surface de coque d'un cylindre creux et la surface constituée par la fenêtre de ressort en arc (202) de la cloche d'embrayage interne (200) étant de préférence un plan coupant le cylindre creux de manière sensiblement perpendiculaire.

7. Dispositif d'accouplement selon l'une quelconque des revendications 1 à 6, **caractérisé en ce que**, pour une rotation mutuelle de la lame d'amortisseur (220) et de la cloche d'embrayage interne (200) lorsque le dispositif d'accouplement (10) est sensiblement ouvert, une butée périphérique (205) de la fenêtre de ressort en arc (202) de la cloche d'embrayage interne (200) est mobile dans le sens radial (Ra) à l'extérieur au-dessus et/ou dans le sens radial (Ra) à l'intérieur en dessous de la fenêtre de ressort en arc (221) de la lame d'amortisseur (220) et/ou une butée périphérique (226) de la fenêtre de ressort en arc (221) de la lame d'amortisseur (220) peut être introduite dans la cloche d'embrayage interne (200), en particulier dans une fente à ressort (207) s'étendant dans le sens périphérique (Um) de la cloche d'embrayage interne (200).

8. Dispositif d'accouplement selon l'une quelconque des revendications 1 à 7, **caractérisé en ce qu'**une lamelle à friction (110, 210), en particulier une lamelle à friction (110) côté externe, est prévue entre la cloche d'embrayage interne (200) et la lame d'amortisseur (220) et le dispositif d'accouplement (10) présente dans le sens axial (Ax) écartée de celui-ci au moins une autre lamelle à friction (110, 210), de préférence au moins une lamelle à friction (110) côté externe et au moins une lamelle à friction (210) côté interne se raccordant.

9. Dispositif d'accouplement selon les revendications 4, 5 et 7, **caractérisé en ce que** :
• la lame d'amortisseur (220) est d'un seul tenant, constituée d'un seul matériau ou formée intégralement ;
• la lame d'amortisseur (220) est conçue comme une lamelle à friction (220) complète du dispositif d'accouplement (10) ;
• le ressort en arc (13) est également monté dans le sens périphérique (Um) au moyen de la lame d'amortisseur (220) et de la cloche d'embrayage (100/200) ;
• la fenêtre axiale (221) de la lame d'amortisseur (220) destinée à recevoir le ressort en arc (13) est accessible radialement vers l'intérieur ;
• la cloche d'embrayage interne (200) présente une section de lamelle à friction (201) ;
• la cloche d'embrayage interne (200) est intégrée, constituée d'un seul matériau ou formée intégralement ;
• la fenêtre radiale (202) de la cloche d'embrayage interne (200) destinée à recevoir le ressort en arc (13) est accessible axialement sur le côté ;
• le dispositif amortisseur (12) a exactement deux ou exactement trois ressorts en arc (13) ; et/ou
• la fente à ressort (207) s'étend d'environ 5° à environ 20°, de préférence d'environ 7,5° à environ 15° ou en particulier d'environ 10° à environ 12,5° dans le sens périphérique (Um).

10. Ensemble de transmission de couple ou embrayage, en particulier embrayage à roulement à l'état humide (1), pour un groupe motopropulseur de moto, avec un dispositif d'accouplement (10), en particulier un dispositif d'accouplement à roulement à l'état humide (10), selon l'une quelconque des revendications 1 à 9.
